# EUROPEAN PATENT APPLICATION

(11) **EP 2 359 687 A1**
(43) Date of publication of application: **24.08.2011**
(21) Application number: 11153694.2
(22) Date of filing: 08.02.2011
(51) Int. Cl.: A01M 29/16

(54) **Acoustic deratization device**

(30) Priority: 11.02.2010 IT PD20100038
(71) Applicant: MULTITECNO S.r.l., 30025 Fossalta Di Portogruaro (Prov. of Venezia) (IT)
(72) Inventor: Reatti, Guido, 35128, Padova (IT)
(74) Representative: Modiano, Micaela Nadia

(57) **Abstract**

An acoustic deratization device (10), of the type comprising a diffuser body (11) provided with an internal cavity (14) in which a piezoelectric transducer (16) is applied, the piezoelectric transducer being controlled by means of a board (17) with an electronic circuit (18), which is contained in a box-like body (19) for supporting the diffuser body (11).

The piezoelectric transducer (16) is driven externally by an amplifier with a sinusoidal or pseudosinusoidal output (20), which is modulated with pulses of substantially constant amplitude generated by a microcontroller (21).

## Description

The present invention relates to an acoustic deratization device.

Nowadays acoustic deratization devices are known, which generally comprise a diffuser which is constituted by a body made of brass that has annular peripheral rings which are mutually axially spaced apart, an external upper concave surface and a cavity below in which there is a flat bottom on which a piezoelectric transducer is fixed.

The piezoelectric transducer is controlled by a board, with an electronic circuit, which is contained in a box-like body. The electronic circuit comprises means for detecting the vibrational state of the piezoelectric transducer.

The piezoelectric transducer, which is of the type known as 'self-oscillating' or 'with three electrodes', is excited by means of a modulated amplitude sinusoidal oscillator, thus making the diffuser generate a sound emission at a frequency which is comprised between sound and ultrasound, and is adapted to cause annoyance to rodents.

The acoustic pressure wave is generated by the free self-oscillation of the assembly that is constituted by the piezoelectric transducer element and by the brass body, since these two elements are integrally connected to each other.

The acoustic frequency and the sound level which characterize the emission, therefore, are the result of the vibration of the piezoelectric transducer and of the brass body and therefore they are determined and conditioned by the physical and mechanical characteristics of the piezoelectric transducer, of the brass body and of the system for coupling the two elements, because it is through this coupling system that the free self-oscillation is effectively transferred from the piezoelectric transducer to the brass body.

This deratization device, although widespread and appreciated for its functionality, shows room for improvement.

Indeed, the operation of this known device is conditioned by the fact that, if the brass body and the self-oscillating piezoelectric transducer glued to it are not of optimal quality, and their characteristics do not correspond to what is expected (for example a turning defect in the brass body, or a defect in the self-oscillating piezoelectric transducer, which can often be of low quality), then this can lead to critical situations.

The sum of the cited defects can give rise to a deratization signal that has frequency values and power levels which can fluctuate arbitrarily from one moment to the next, in the same apparatus.

Furthermore, these parameters can often be non-homogeneous among apparatuses in the same production batch, to the point where it is not possible to exactly replicate the performance characteristics in all of the devices, with consequent uncertainty and impossibility of ensuring effectiveness and constancy of the interference against rodents.

Indeed, if the vibrations of the piezoelectric transducer and of the diffuser body are not synchronous, then they do not achieve the desired acoustic emission and the deratization device does not perform its function.

This inability to govern the frequency and power can lead to undue vibrational stresses also on the box-like body that carries the brass diffuser, as well as on the electronic board contained in it, with the breakage of elements on the board and the generation of unwanted absorptions of current of up to five or six amps.

The aim of the present invention is to provide an acoustic deratization device, which is capable of overcoming the limitations and drawbacks of similar devices of known type.

Within this aim, an object of the invention is to provide a device that can function continuously according to the frequency and power parameters which were designed and are desired, without resulting in the previously mentioned drawbacks of the known types.

Another object of the invention is to provide a device in which the diffuser and the piezoelectric transducer vibrate synchronously, thus ensuring the correct acoustic emission.

A further object of the invention is to provide an acoustic deratization device that can be produced using known systems and technologies, with repeatability, constancy and homogeneity of quality standards in mass production, as well as at costs that are competitive with similar known devices.

This aim, as well as these and other objects which will become better evident hereinafter, are achieved by an acoustic deratization device, of the type comprising a diffuser body provided with an internal cavity in which a piezoelectric transducer is applied, said piezoelectric transducer being controlled by means of a board with an electronic circuit, which is contained in a box-like body for supporting said diffuser body, said device being characterized in that said piezoelectric transducer is driven externally by an amplifier with a sinusoidal or pseudosinusoidal output, which is modulated with pulses of substantially constant amplitude generated by a microcontroller which is adapted to generate a square wave signal.

Further characteristics and advantages of the invention will become better apparent from the following detailed description of a preferred, but not exclusive, embodiment of the acoustic deratization device according to the invention, illustrated, by way of non-limiting example, in the accompanying drawings, wherein:

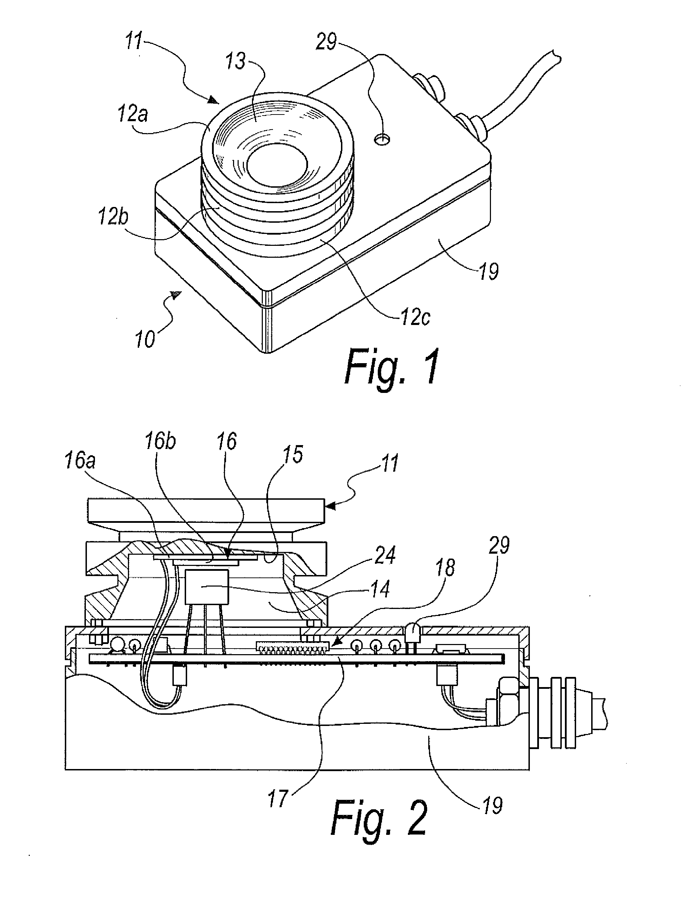

Figure 1 is a perspective view of a device according to the invention in its entirety;
Figure 2 is a sectional side view of the device according to the invention;
Figure 3 is a functional block diagram of the device according to the invention.

With reference to the figures, an acoustic deratization device is generally indicated with the reference numeral 10.

The device 10 comprises a diffuser body 11, which is constituted by a turning body, made of metal, preferably brass, which is shaped so as to define three annular peripheral rings 12a, 12b, 12c, which are mutually axially spaced apart.

The diffuser body 11 is shaped in an upper region so as to define a concave surface 13, which is specifically frustum-shaped.

In a lower region, the diffuser body 11 has a cavity 14 in which there is a flat bottom 15 on which a piezoelectric transducer 16 is fixed.

The piezoelectric transducer 16 is controlled by means of a board 17 with an electronic circuit, which is contained in a box-like body 19 for supporting the diffuser body 11.

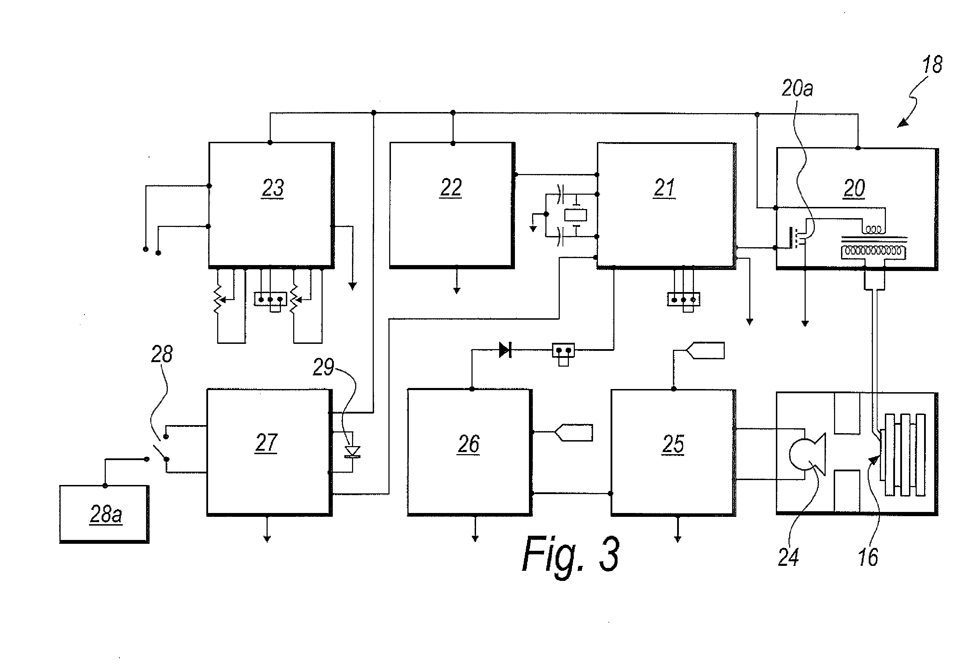

The device 10 is characterized in that the piezoelectric transducer 16 is driven externally by an electronic circuit 18 which comprises an amplifier 20 with a sinusoidal or pseudosinusoidal output, which is modulated with pulses of substantially constant amplitude generated by a microcontroller 21 that is adapted to generate a square wave signal, as can clearly be seen in the diagram of Figure 3.

The microcontroller 21 is implemented by a microprocessor, which is per se known.

The square wave signal can be continuous or intermittent; in the latter case it is also known as "alternating".

The amplifier 20 is associated with trimmers 20a for adjusting the threshold of sound emission.

In particular, the piezoelectric transducer 16 is of the type that is known in the jargon as 'with two electrodes', or 'externally driven', or 'non-self-oscillating'.

The piezoelectric transducer 16, which is of a known type, comprises a brass disk 16a which bears a disk of ceramic material 16b .

Such a piezoelectric transducer 16 is not free to self-oscillate and independently determine the emission frequency, which happens in known devices such as those with a self-oscillating piezoelectric transducer with three electrodes, but rather by means of the electronic control circuit 19 the piezoelectric device is driven externally directly by the microcontroller 21 by means of the amplifier 20.

In this way, once the piezoelectric transducer 16 is glued to the diffuser body 11, the vibration imposed by means of the microcontroller 21 and the amplifier 20 on the piezoelectric transducer 16 will definitely be of the desired frequency and it will be propagated exactly to the diffuser 11, and the two elements, the diffuser 11 and the piezoelectric transducer 16, will definitely vibrate synchronously, thus generating the desired sound emission, because the acoustic frequency and the sound level are not determined, and therefore conditioned, by the physical and mechanical characteristics of the piezoelectric transducer, of the brass body and of the system for coupling the two elements.

By adopting such a non-self-oscillating piezoelectric transducer 16 and such a circuit 18, it is no longer possible for the diffuser body 11 to vibrate out of synch with respect to the vibration produced by the piezoelectric transducer, and it is thus certain to prevent unwanted system halts which are typical of the known devices described above.

The electronic circuit 18 is completed by a precision stabilizer 22, which is connected to the microcontroller 21, and by a primary stabilized electronic power supply circuit 27 which is adjustable.

The device 10 according to the invention also comprises means for detecting the vibrational state of the piezoelectric transducer 16.

These means for detecting the vibrational state of the piezoelectric transducer comprise a microphone 24, which is arranged within the cavity 14 of the diffuser 11.

The microphone 24 is connected to an amplifier 25 of the sinusoidal signal that comes from the microphone 24.

The amplifier 25 is connected to a signal detector 26, which is also connected to the microcontroller 21, the microcontroller 21 controlling, with one of its outputs, a final stage 27 the purpose of which is to excite a control relay which is designed to keep a switch 28 normally closed.

When the microcontroller 21 sees that the signal detected by the microphone 24 is in synch with the generated pulses, it keeps the relay in a state of excitement, and the switch 28 is in its normally closed state.

When the microcontroller 21 sees that signal and pulse are out of synch, or that the signal is absent, it drives the disexcitation of the relay and the opening of the line switch 28, with consequent activation of a remote alarm signal, i.e. an alarm to a control centre 28a or to a local alarm or other warning indicator device.

The switch 28, when open, generates an alarm signal by turning off a luminous LED 29, which is connected to the electronic circuit 18 and is visible from outside the box-like body 19.

Furthermore, the opening of the switch 28 also produces the generation of a signal for an optional multi-zone feed center to which the device 10 is connected together with a plurality of variously-positioned identical devices.

In practice it has been found that the invention fully achieves the intended aim and objects.

In particular, with the invention an acoustic deratization device has been made available that is capable of functioning continuously according to the preset frequency parameters without resulting in the previously mentioned drawbacks of the known types, thanks to the piezoelectric transducer which is externally driven, by means of microcontroller and sinusoidal or pseudosinusoidal wave amplifier, with certain frequency and power.

Furthermore, with the invention a device has been made available in which the diffuser and the piezoelectric transducer vibrate synchronously, thus ensuring the correct acoustic emission.

Also, with the invention a device has been made available which is higher quality in terms of components, since piezoelectric transducers with two electrodes, or 'non-self-oscillating', externally driven, are higher quality on average, and generally the defectiveness rate of these piezoelectric transducers on the market is far lower than piezoelectric transducers with three electrodes, or 'self-oscillating'.

Furthermore, with the invention a device has been made available which does not present frequency drifts, with consequently lower risks of breakage for the box-like body and the electrical circuit contained therein.

Furthermore, with the invention an acoustic deratization device has been made available which can be produced using known systems and technologies, as well as at costs that are competitive with similar known devices, with standards of quality that are definitely repeatable in mass production.

The invention thus conceived is susceptible of numerous modifications and variations, all of which are within the scope of the appended claims. Moreover, all the details may be substituted by other, technically equivalent elements.

In practice the materials employed, as well as the dimensions and the contingent shapes, may be any according to requirements and to the state of the art.

The disclosures in Italian Patent Application No. PD2010A000038 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An acoustic deratization device (10), of the type comprising a diffuser body (11) provided with an internal cavity (14) in which a piezoelectric transducer (16) is applied, said piezoelectric transducer being controlled by means of a board (17) with an electronic circuit (18), which is contained in a box-like body (19) for supporting said diffuser body (11), said device being **characterized in that** said piezoelectric transducer (16) is driven externally by an amplifier with a sinusoidal or pseudosinusoidal output (20), which is modulated with pulses of substantially constant amplitude generated by a microcontroller (21).

2. The device according to claim 1, **characterized in that** said microcontroller (21) is constituted by a microprocessor adapted to generate a square-wave continuous or intermittent signal.

3. The device according to claim 1, **characterized in that** trimmers (20a) for adjusting the threshold of sound emission are associated with the amplifier (20).

4. The device according to the preceding claims, **characterized in that** said piezoelectric transducer (16) is of the non-self oscillating type, with two electrodes, and is externally driven.

5. The device according to the preceding claims, **characterized in that** said electronic circuit (18) comprises a precision stabilizer (22), which is connected to the microcontroller (21), and a primary stabilized electronic power supply circuit (27) which is adjustable

6. The device according to the preceding claims, **characterized in that** it comprises means for detecting the vibrational state of the piezoelectric transducer (16).

7. The device according to the preceding claims, **characterized in that** said means for detecting the vibrational state of the piezoelectric transducer comprise a microphone (24), which is arranged within the cavity (14) of the diffuser (11), said microphone (24) being connected to an amplifier (25) of the signal that originates from said microphone (24), said amplifier (25) being connected to a signal detector (26), which is also connected to the microcontroller (21), said microcontroller (21) controlling with one of its outputs a final stage (27) whose purpose is to drive a control relay designed to keep a line switch (28) normally closed.
